# EUROPEAN PATENT APPLICATION

(11) **EP 4 592 685 A1**
(43) Date of publication of application: **30.07.2025**
(21) Application number: 23867877.5
(22) Date of filing: 18.07.2023
(51) Int. Cl.: G01N 35/02, G01N 1/10

(54) **AUTOMATED ANALYSIS DEVICE**

(30) Priority: 21.09.2022 JP 2022150195
(71) Applicant: HITACHI HIGH-TECH CORPORATION, Tokyo 105-6409 (JP)
(72) Inventor: YOKOYAMA, Koki, Tokyo 105-6409 (JP); UMEKI, Hiroya, Tokyo 105-6409 (JP); TAKAKURA, Tatsuki, Tokyo 105-6409 (JP); NODA, Kazuhiro, Tokyo 105-6409 (JP); TANOUE, Hidetsugu, Tokyo 105-6409 (JP)
(74) Representative: Strehl & Partner mbB
(86) International application number: PCT/JP2023/026283
(87) International publication number: WO 2024/062751

(57) **Abstract**

Provided is an automatic analyzer capable of reducing the number of movable shafts compared to a prior art.

An automatic analyzer 1 includes a B/F separation portion 104, a reaction solution aspiration nozzle 106, and a replacement solution discharging nozzle 108. The B/F separation portion 104 is movable in a vertical direction and in a horizontal direction. Alternatively, the automatic analyzer 1 includes the B/F separation portion 104, the reaction solution aspiration nozzle 106, the replacement solution discharging nozzle 108, a luminescent measurement portion 134, a measurement flow path introducing nozzle 130, a washing solution storage container 122, and a buffer solution storage container 120. The B/F separation portion 104, the washing solution storage container 122 and a buffer solution storage container 120 are provided on a turn table 102.

## Description

### Technical Field

The present invention relates to an automatic analyzer.

### Background Art

There is disclosed technology relating to an automatic analyzer for biological component analysis, which is provided with a magnetic separation portion, a nozzle for removing excessive label substances, and a nozzle for discharging a replacement solution (see Patent Literature 1).

### Citation List

### Patent Literature

Patent Literature 1: International Publication WO 2020/235162

### Summary of Invention

### Technical Problem

The technology as disclosed in Patent Literature 1 does not consider reduction in size of the automatic analyzer by decreasing the number of axes of the actuator adapted to complicated nozzle operations.

It is an object of the present invention to provide an automatic analyzer capable of decreasing the number of movable axes.

### Solution to Problem

The automatic analyzer according to an aspect of the present invention includes a magnetic separation portion which captures magnetic particles in a first container that accommodates a reaction solution into which a sample and a reagent are mixed, a first nozzle that aspirates a first solution in the first container, and a second nozzle that discharges a second solution into the first container in which the first solution is aspirated. The magnetic separation portion is configured to be movable in a vertical direction and in a horizontal direction. Advantageous Effects of Invention

The present invention ensures to provide the automatic analyzer capable of decreasing the number of movable axes.

### Brief Description of Drawings

[FIG. 1] FIG. 1 is a view illustrating the schematic configuration of an automatic analyzer.
[FIG. 2] FIG. 2 is a top plan view of an analysis operation unit.
[FIG. 3] FIG. 3 is a side view of the analysis operation unit.
[FIG. 4] FIG. 4 is a top plan view of another overall configuration of the analysis operation unit.
[FIG. 5] FIG. 5 is a side view of another overall configuration of an actual analysis operation unit.
[FIG. 6] FIG. 6 is a top plan view of another schematic configuration of the analysis operation unit. Description of Embodiments

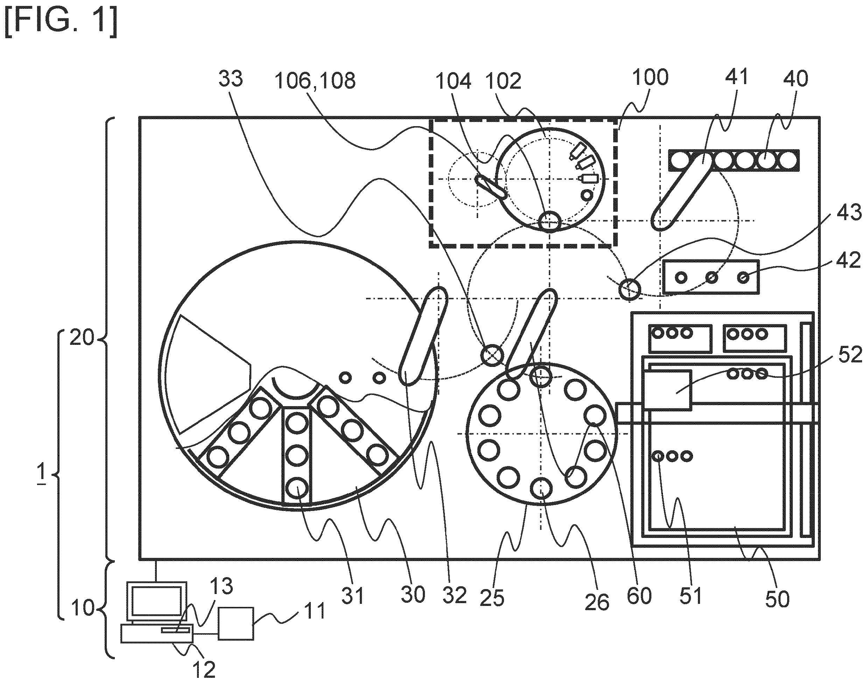

The embodiment of the automatic analyzer will be described referring to FIG. 1 to FIG. 6. In the drawings attached to the specification, identical or corresponding elements are followed by the same or similar codes, and repetitive explanations thereof, thus may be omitted.

An overall configuration of the automatic analyzer will be described referring to FIG. 1. FIG. 1 is a view illustrating the schematic configuration of the automatic analyzer. FIG. 1 is a view illustrating the schematic configuration of the automatic analyzer.

An automatic analyzer 1 includes a control unit 10 and an analysis operation unit 20. The automatic analyzer 1 is configured to implement functions of storing a plurality of reagent containers 31 along the inside of an outer circumferential wall of a cylindrical reagent disk 30 supported rotatably around a vertical axis, and allowing a dispensing pipette to aspirate a predetermined amount of a predetermined reagent from each of the reagent containers 31 so that the reagent is supplied to biological samples such as blood and urine dispensed into a reaction container 51 for analysis.

A route for conveying the sample to be analyzed is described.

The sample to be analyzed is moved inside the automatic analyzer 1 by a sample conveyance mechanism (not shown for convenience of illustration) such as a belt conveyor and a rack handler while being stored in a sample container 40, and further conveyed to a sample dispensing mechanism 41 provided with the dispensing pipette for sample dispensation so that the sample is dispensed.

A plurality of reaction containers 51 mounted on an unused reaction vessel storing portion 50 are supplied into the automatic analyzer 1.

A reaction container conveyance mechanism 52 grips each of the reaction containers 51 one by one from the unused reaction vessel storing portion 50, and lifts the reaction container to move to a buffer 42 (sample discharging position of a sample dispensing mechanism 41). The reaction container 51 on a buffer 42 is moved to a reaction container gripping position 43. The reaction container conveyance mechanism 52 is configured to be movable along an X axis (left-right direction of FIG. 1), a Y axis (front-rear direction of FIG. 1), and a Z axis (upper-lower direction of FIG. 1) to allow the above-described movements.

A disc-like incubator 25 rotatably journaled about a vertical central axis is configured to have a plurality of reaction container mounting portions 26 for locking those reaction containers 51 along the circumference near the outer periphery. Rotation of the incubator 25 allows movements of the reaction containers 51 to the predetermined positions, respectively.

The sample dispensing mechanism 41 moves to a region above the sample, and aspirates the sample. The mechanism then moves to a region above the reaction container 51 on the buffer 42, and discharges the sample into the reaction container 51. Thereafter, the sample dispensing mechanism 41 washes a nozzle of the dispensing pipette by a washing mechanism (not shown). When using a replaceable tip instead of the nozzle, the tip may be replaced by a replacing mechanism (not shown).

A route for conveying the reagent to be added to the sample in the reaction container 51 is described.

A conveyance mechanism 60 is configured to be circularly movable in a moving range including the buffer 42, the reaction container gripping position 43, a reagent discharging position 33 of a reagent dispensing mechanism 32, the reaction container mounting portion 26 on the incubator 25, and a B/F (Bound/Free) separation portion 104 of an analysis unit 100, and to be rotatable to convey the reaction containers 51 to the respective positions.

The cylindrical reagent disk 30 which is rotatably journaled about the vertical central axis, and has its inside formed as a cavity constitutes a reagent holding portion 34 for radially holding a plurality of reagent containers 31 along a hollow case 38. A part of the reagent containers 31 includes the reagent that contains a large amount of magnetic particles for stirring. The detailed configuration will be described later.

The reagent dispensing mechanism 32 is configured to be movable to a predetermined position after aspiration of the reagent in the reagent container 31. The reagent dispensing mechanism 32 moves to a region above the predetermined type of reagent on the reagent disk 30 to aspirate a predetermined amount of the reagent. Then the reagent dispensing mechanism moves to a region above the reaction container 51 mounted on the reagent discharging position 33 set around the incubator 25 so that the reagent is discharged into the reaction container 51.

A reagent stirring mechanism (not shown) is provided above the reagent disk 30. The stirring mechanism has a magnetic particle stirring arm (stirrer) rotatable around the vertical axis. The magnetic particle stirring arm moves to a region above the reagent container 31 that accommodates the reagent containing magnetic particle as the stirring target, and lowers the paddle-like or spiral magnetic particle stirring mechanism provided at the lower end of the magnetic particle stirring arm into the reagent. The magnetic particle stirring mechanism is rotated to stir the solution containing magnetic particles. The magnetic particle stirring arm is operated to stir the magnetic particles just before dispensing the reagent to prevent spontaneous precipitation of the magnetic particles in the solution. After stirring, the magnetic particle stirring arm moves upward to a position above the reagent container 31, and moves to a region above the washing mechanism that accommodates a washing solution. The magnetic particle stirring arm then moves downward into the washing solution to rotate the magnetic particle stirring mechanism so that the magnetic particles adhering to the stirring mechanism are removed.

The reaction solution is generated after passage of predetermined reaction time from dispensation of the sample and the predetermined reagent. A conveyance mechanism 60 moves the reaction container 51 that accommodates the reaction solution to the B/F separation portion 104 of the analysis unit 100.

The B/F separation portion 104 serves as a part that captures the magnetic particle in the reaction container 51 for accommodating the reaction solution into which the reagent and the sample are mixed. More specifically, the B/F separation portion is the mechanism for separating the reaction solution into the magnetic particles and the reaction solution containing no magnetic particles using a magnet 105 that magnetically adsorbs the magnetic particles to the inner wall of the reaction container 51, which contain substances immunologically combined with the substance to be measured in the reaction solution contained in the reaction container 51 that has been conveyed by the conveyance mechanism 60.

A reaction solution aspiration nozzle 106 for aspiring the reaction solution in the reaction container 51 is configured to be rotatable and liftable. After passage of the predetermined time, the nozzle moves to a region above the reaction container 51 on the B/F separation portion 104, and then moves downward to aspirate the reaction solution containing no magnetic particles in the reaction container 51.

A replacement liquid discharging nozzle 108 for discharging a replacement solution into the reaction container 51 having the reaction solution aspirated is configured to be rotatable and liftable. The nozzle moves to a region above the reaction container 51 on the B/F separation portion 104, from which the reaction solution containing no magnetic particle has been aspirated, and moves downward to discharge a buffer solution into the reaction container 51.

The stirring mechanism (not shown) applies the rotary movement to the reaction container 51 to mix the magnetic particles and the buffer solution within the reaction container. After the mixture, the reaction container 51 is conveyed to a position below a measurement flow path introducing nozzle 130 by rotating operations of a turn table 102.

The measurement flow path introducing nozzle 130 is the rotatable and liftable nozzle for aspiring the reaction solution in the reaction container 51, and introducing the aspirated reaction solution into a luminescence measurement portion 134.

The luminescence measurement portion 134 detects concentration or the like of the substance to be detected in the reaction solution which has been aspirated and fed by the measurement flow path introducing nozzle 130.

The reaction container 51 which keeps the analyzed reaction solution is moved to a region above a reaction container disposal port (not shown) by the reaction container conveyance mechanism 52 to dispose the reaction container 51 into a reaction container disposal portion (not shown) through the reaction container disposal port.

The automatic analyzer 1 as illustrated in FIG. 1 allows efficient analysis of a plurality of samples with respect to a plurality of analysis items by combining or repeatedly operating the above-described operations.

The mechanism of the automatic analyzer 1 as described above is referred to as the analysis operation unit 20.

The automatic analyzer 1 includes the control unit 10 for controlling operations of the respective devices in the automatic analyzer 1 in addition to the analysis operation unit 20. The control unit 10 includes an operation portion 11, a processing portion 12 and a memory portion 13.

For example, the processing portion 12 is formed of a hardware board and a computer, and has the built-in memory portion 13 such as a hard disk.

The memory portion 13 stores control parameters corresponding to the respective units, and sample information relating to the respective samples.

The processing portion 12 may be formed as the hardware using the dedicated circuit board, or the software to be executed by the computer. The processing portion formed as the hardware may be implemented by integrating a plurality of arithmetic units for executing processing on the circuit board, in the semiconductor chip, or in the package. The processing portion formed as the software may be implemented by installing a high-speed general-purpose CPU in the computer so as to execute the program for performing the desired arithmetic processing. The recording medium that records such program allows upgrading of the existing device. Those devices, circuits, and the computer are connected with one another via a wired or wireless network for appropriate data transmission/reception.

The operation portion 11 includes a display unit or a display, and an input unit such as a mouse and a keyboard. The display unit displays various types of information relating to the automatic analyzer 1, which is stored in the memory portion 13.

The configuration of the automatic analyzer 1 according to the embodiment has been described.

FIG. 1 illustrates the automatic analyzer configured to install the luminescence measurement portion 134 for the immunological analysis. The automatic analyzer to which the present invention is applied may be configured without being limited to the one as described above. The present invention may be applied to the automatic analyzer provided with the detection unit for biochemical system, or the detection units for both the biochemical system and the immunological system. The automatic analyzer may further be provided with the detection unit for other additional or replaceable analytical items.

The automatic analyzer is not limited to the one configured as the single analytical module as illustrated in FIG. 1, but may be provided with two or more analytical modules that can measure the same or different analytical items of various types, and preprocessing modules for executing preprocessing, which are connected by the conveyance device.

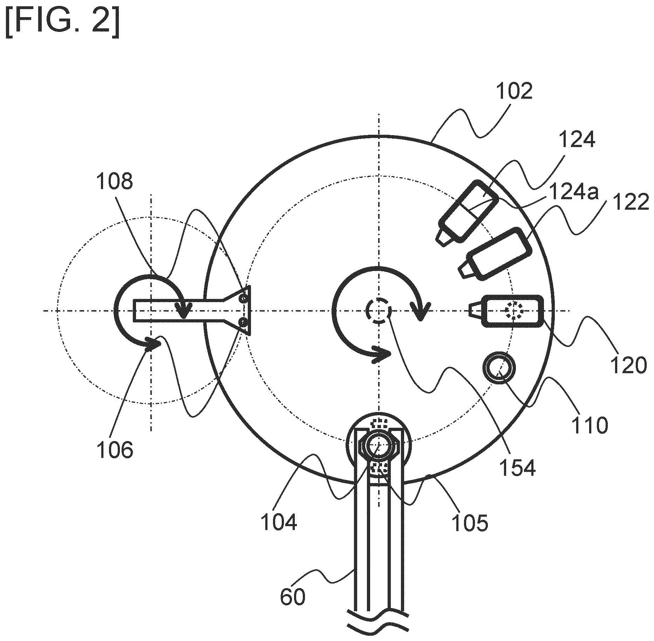

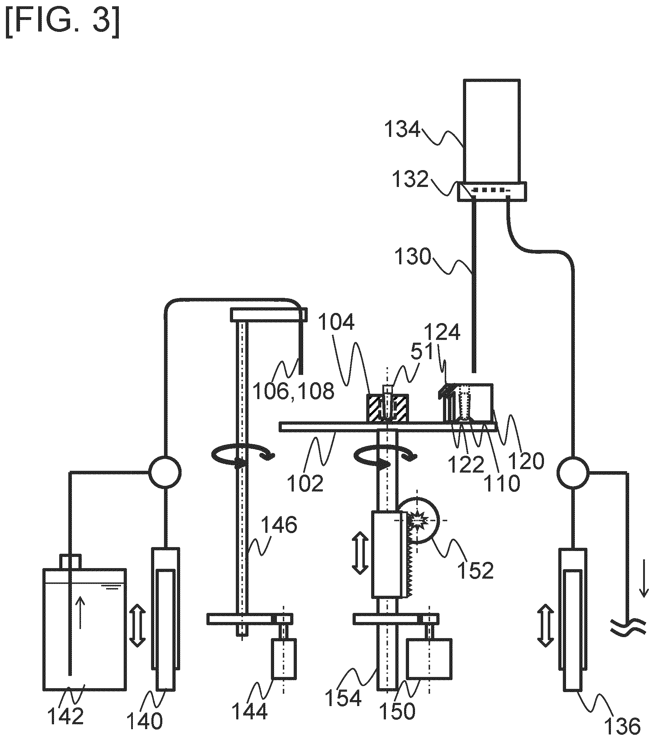

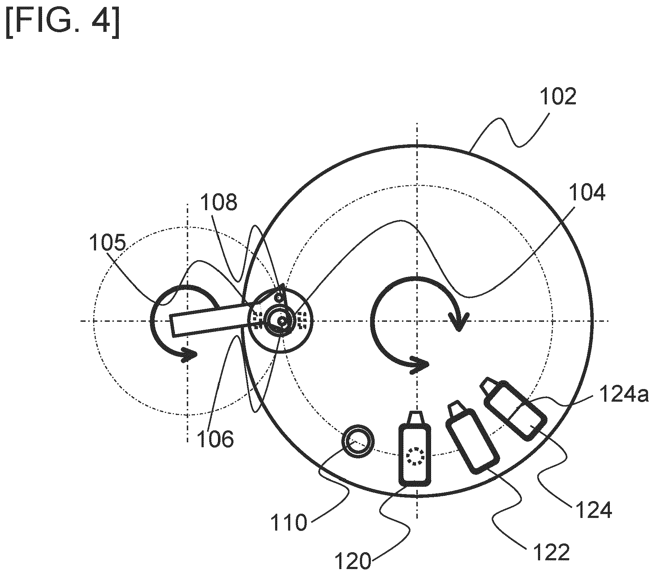

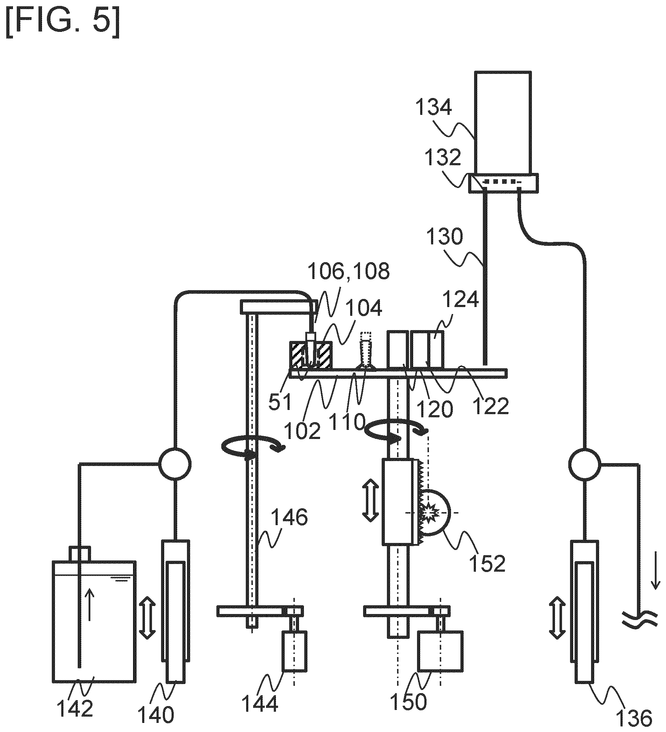

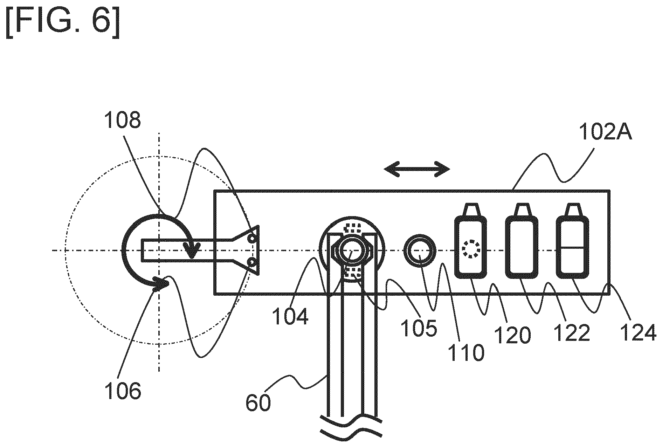

Referring to FIG. 2 to FIG. 6, the analysis unit 100 of the automatic analyzer 1 is described in detail. FIGS. 2 and 4 are top plan views of an analysis operation unit, and FIGS. 3 and 5 are side views of overall configuration of an analysis operation unit. FIG. 6 is a top plan view of the analysis operation unit according to another embodiment.

As FIG. 2 to FIG. 5 illustrate, the analysis unit 100 includes the turn table 102, the B/F separation portion 104, the reaction solution aspiration nozzle 106, the replacement liquid discharging nozzle 108, the luminescence measurement portion 134, the measurement flow path introducing nozzle 130, a washing solution storage container 122, a buffer solution storage container 120, A LFC (liquid Flow Cleaning) container 124, a measurement flow path pump 136, a reaction solution aspiration/replacement solution discharging pump 140, a nozzle rotating motor 144, a rotary shaft 146, a turntable rotating motor 150, a turntable lifting motor 152, a rotary shaft 154, and the like.

The buffer solution storage container 120 provided on the turn table 102 is a container for storing the buffer solution that contains luminescent substances.

The washing solution storage container 122 provided on the turn table 102 is a container for storing the washing solution to wash the flow path ranging from the measurement flow path introducing nozzle 130 to the luminescence measurement portion 134.

The LFC container 124 provided on the turn table 102 is a container which stores a flow path washing solution for washing the reaction solution aspiration nozzle 106 and the measurement flow path introducing nozzle 130. The LFC container 124 includes a partition 124a for separating the flow path washing solution into the one for washing the reaction solution aspiration nozzle 106 and the one for washing the measurement flow path introducing nozzle 130.

In this embodiment, the B/F separation portion 104 is installed on the turn table 102 provided with a reaction container mounting portion 110 for mounting the reaction container 51 on the turn table 102, the buffer solution storage container 120, the washing solution storage container 122, the LFC container 124, and the like. The B/F separation portion is configured to be movable in the vertical direction and in the horizontal direction in association with the reaction container mounting portion 110 and the like.

As FIG. 2 and FIG. 4 illustrate, on the turn table 102, the reaction container mounting portion 110, the washing solution storage container 122, the buffer solution storage container 120, the LFC container 124, and the B/F separation portion 104 are radially arranged with respect to the rotary shaft 154 of the turn table 102 as the center.

The conveyance mechanism 60 and the B/F separation portion 104 are provided at the interval so that the conveyance mechanism 60 is positioned above the B/F separation portion 104 in the vertical direction in the state where the measurement flow path introducing nozzle 130 is positioned above the buffer solution storage container 120 in the vertical direction. In this state, when the measurement flow path introducing nozzle 130 aspirates the buffer solution from above the buffer solution storage container 120, the conveyance mechanism 60 is controlled to provide the reaction container 51 on the B/F separation portion 104, or to collect the reaction container 51 from the B/F separation portion 104.

A trajectory of the B/F separation portion 104, and trajectories of the reaction solution aspiration nozzle 106 and the replacement liquid discharging nozzle 108 intersect with each other by the rotating operation of the turn table 102.

Operations in the B/F separation cycle in the automatic analyzer 1 is described.

As FIG. 2 illustrates, the conveyance mechanism 60 provides the reaction container 51 on the B/F separation portion 104. In this state, the magnet 105 installed in the B/F separation portion 104 captures magnetic particles in the reaction solution held in the reaction container 51 to separate the solution into the magnetic particles and other substances.

As FIG. 4 illustrates, the turntable rotating motor 150 is driven to rotate the turn table 102 about the rotary shaft 154 to move the B/F separation portion 104 to a position below the reaction solution aspiration nozzle 106.

The turntable lifting motor 152 is driven to lift the turn table 102 so that the reaction solution aspiration nozzle 106 is inserted into the reaction container 51 of the B/F separation portion 104 as illustrated in FIG. 5.

The reaction solution aspiration/replacement solution discharging pump 140 is driven to aspirate the reaction solution that has not been captured by the B/F separation portion 104.

After the turn table 102 is moved downward by driving the turntable lifting motor 152, the nozzle rotating motor 144 is driven to rotatably move the replacement liquid discharging nozzle 108 about the rotary shaft 146 to a position above the B/F separation portion 104.

Then, the turntable lifting motor 152 is driven to lift the turn table 102 again so that the replacement liquid discharging nozzle 108 is inserted into the reaction container 51 of the B/F separation portion 104.

The buffer solution is pumped out of a replacement solution bottle 142 using the reaction solution aspiration/replacement solution discharging pump 140, and discharged into the reaction container 51 of the B/F separation portion 104.

An overlap state between the detection cycle and the B/F separation cycle in the automatic analyzer 1 is described.

In the measurement cycle, the turntable rotating motor 150 is driven to rotate the turn table 102 about the rotary shaft 154 to move the reaction container mounting portion 110 to a position just below the measurement flow path introducing nozzle 130 as FIG. 2 and FIG. 3 illustrate.

The measurement flow path pump 136 is then driven to aspirate the reaction solution on the reaction container mounting portion 110 so that the reaction solution is introduced into a measurement flow path 132.

The turntable lifting motor 152 is driven to lift the turn table 102 so that the measurement flow path introducing nozzle 130 is inserted into the buffer solution storage container 120 for aspiration of the buffer solution.

Finally, the turntable lifting motor 152 is driven to lift the turn table 102 to control the conveyance mechanism 60 to provide/collect the reaction container 51 on/from the B/F separation portion 104 during aspiration of the buffer solution.

As FIG. 2 to FIG. 5 illustrate, the turn table 102 is rotatable and liftable, and has the washing solution storage container 122, the buffer solution storage container 120, and the B/F separation portion 104 are not limited to provide radially about the rotary shaft 154. As FIG. 6 illustrates, a table 102A may be moved in the horizontal direction and in the vertical direction, and configured to provide the washing solution storage container 122, the buffer solution storage container 120, and the B/F separation portion 104 along a horizontal movement direction of the table 102A.

Next, the effect of the present embodiment is described.

The above-described automatic analyzer 1 includes the B/F separation portion 104 which captures magnetic particles in the reaction container 51 that accommodates the reaction solution into which the sample and the reagent are mixed, the reaction solution aspiration nozzle 106 that aspirates the reaction solution (first solution) in the reaction container 51, and the replacement liquid discharging nozzle 108 that discharges the replacement solution (second solution) into the reaction container 51 in which the reaction solution is aspirated. The B/F separation portion 104 is configured to be movable in the vertical direction and in the horizontal direction. Alternatively, the automatic analyzer 1 includes the B/F separation portion 104 which captures magnetic particles in the reaction container 51 that accommodates the reaction solution into which the sample and the reagent are mixed, the reaction solution aspiration nozzle 106 that aspirates the reaction solution in the reaction container 51, the replacement liquid discharging nozzle 108 that discharges the replacement solution into the reaction container 51 in which the reaction solution is aspirated, the luminescence measurement portion 134, the measurement flow path introducing nozzle 130 which introduces the reaction solution into the luminescence measurement portion 134, the washing solution storage container 122 which stores the washing solution for washing the flow path ranging from the measurement flow path introducing nozzle 130 to the luminescence measurement portion 134, and the buffer solution storage container 120 which stores the buffer solution which contains the luminescent substance. The B/F separation portion 104, the washing solution storage container 122, and the buffer solution storage container 120 are provided on the turn table 102.

Lifting operations of the turn table 102 may attain without the lifting operations of both the reaction solution aspiration nozzle 106 and the replacement liquid discharging nozzle 108 during B/F separation. This makes it possible to reduce the number of axes. The resultant effect attains improved temperature control efficiency by reducing the temperature controlled space resulting from size reduction of the device, and cost reduction.

The turn table 102 is rotatable and liftable, and the washing solution storage container 122, the buffer solution storage container 120, and the B/F separation portion 104 are provided radially about the rotary shaft 154 of the turn table 102. This makes it possible to access such configuration only by rotating operations, and suppress increase in the size of the turn table 102.

The table 102A is rotatable and liftable, and the washing solution storage container 122, the buffer solution storage container 120, and the B/F separation portion 104 are provided along an axial direction of the table 102A in the horizontal movement direction. This makes it possible to access such configuration only by horizontal operations, and suppress increase in the size of the table 102A.

The trajectory of the B/F separation portion 104, and trajectories of the reaction solution aspiration nozzle 106 and the replacement liquid discharging nozzle 108 intersect with each other. Required operations may be attained by the minimum drive mechanism and the minimum number of movable axes. This makes it possible to further reduce the time for analytical operations and the size of the device.

The automatic analyzer further includes the LFC container 124 which is provided on the turn table 102, and stores the flow path washing solution for washing the reaction solution aspiration nozzle 106 and the measurement flow path introducing nozzle 130. This allows the configuration required for the immunological analytical items to be provided in the smaller space efficiently.

The LFC container 124 includes the partition 124a that divides the flow path washing solution into the washing solution for washing the reaction solution aspiration nozzle 106 and the washing solution for washing the measurement flow path introducing nozzle 130. This allows the required configuration to be provided in the small space efficiently.

The automatic analyzer further includes the conveyance mechanism 60 that conveys the reaction container 51 to the B/F separation portion 104. The conveyance mechanism 60 is positioned above the B/F separation portion 104 in the vertical direction in the state where the measurement flow path introducing nozzle 130 is positioned above the buffer solution storage container 120 in the vertical direction. Alternatively, the automatic analyzer further includes the conveyance mechanism 60 that conveys the reaction container 51 to the B/F separation portion 104. When the measurement flow path introducing nozzle 130 aspirates the buffer solution from above the buffer solution storage container 120, the conveyance mechanism 60 is controlled so as to provide the reaction container 51 on the B/F separation portion 104, or is controlled so as to collect the reaction container 51 from the B/F separation portion 104. This allows the detection cycle to be overlapped with a part of the B/F separation cycle. It is therefore possible to reduce the cycle time even if lifting operations are sharedly performed.

### <Others>

It should be noted that the present disclosure is not limited to the embodiments described above, and includes various modifications. The above-described embodiments have been described in detail in order to facilitate the understanding of the present invention, and the present invention is not necessarily limited to those including all of the described configurations.

In addition, part of the configuration of one embodiment can be replaced with the configurations of other embodiments, and in addition, the configuration of the one embodiment can also be added with the configurations of other embodiments. In addition, part of the configuration of each of the embodiments can be subjected to addition, deletion, and replacement with respect to other configurations.

For example, the respective numbers of the B/F separation portions 104, the reaction solution aspiration nozzles 106, the replacement liquid discharging nozzles 108, the luminescence measurement portions 134, the measurement flow path introducing nozzles 130, the washing solution storage containers 122, the buffer solution storage containers 120, the LFC containers 124, and the like are not limited. For example, it is possible to provide a single unit of the reaction solution aspiration nozzle 106, or the replacement liquid discharging nozzle 108 at an intermediate position between the two B/F separation portions 104.

### List of Reference Signs

1: automatic analyzer
10: control unit
11: operation portion
12: processing portion
13: memory portion
20: analysis operation unit
25: incubator
26: reaction container mounting portion
30: reagent disk
31: reagent container
32: reagent dispensing mechanism
33: reagent discharging position
40: sample container
41: sample dispensing mechanism
42: buffer
43: reaction container gripping position
50: unused reaction vessel storing portion
51: reaction container (first container)
52: reaction container conveyance mechanism
60: conveyance mechanism (conveyance unit)
100: analysis unit
102: turn table (reservoir base)
102A: table (reservoir base)
104: B/F separation portion (magnetic separation portion)
105: magnet
106: reaction solution aspiration nozzle (first nozzle)
108: replacement liquid discharging nozzle (second nozzle)
110: reaction container mounting portion
120: buffer solution storage container (third container)
122: washing solution storage container (second container)
124: LFC container
124a: partition
130: measurement flow path introducing nozzle (detection portion introducing nozzle)
132: measurement flow path
134: luminescence measurement portion (detection portion)
136: measurement flow path pump
140: replacement solution discharging pump
142: replacement solution bottle
144: nozzle rotating motor
146: rotary shaft
150: turntable rotating motor
152: turntable lifting motor
154: rotary shaft

## Claims

1. An automatic analyzer comprising:
a magnetic separation portion which captures magnetic particles in a first container that accommodates a reaction solution into which a sample and a reagent are mixed;
a first nozzle that aspirates a first solution in the first container; and
a second nozzle that discharges a second solution into the first container in which the first solution is aspirated, wherein
the magnetic separation portion is configured to be movable in a vertical direction and in a horizontal direction.

2. The automatic analyzer according to claim 1, further comprising:
a detection portion;
a detection portion introducing nozzle which introduces the reaction solution into the detection portion;
a second container which stores a washing solution for washing a flow path ranging from the detection portion introducing nozzle to the detection portion;
a third container which stores a buffer solution which contains a luminescent substance; and
a reservoir base on which the magnetic separation portion, the second container and the third container are provided.

3. An automatic analyzer comprising:
a magnetic separation portion which captures magnetic particles in a first container that accommodates a reaction solution into which a sample and a reagent are mixed;
a first nozzle that aspirates a first solution in the first container;
a second nozzle that discharges a second solution into the first container in which the first solution is aspirated;
a detection portion;
a detection portion introducing nozzle which introduces the reaction solution into the detection portion;
a second container which stores a washing solution for washing a flow path ranging from the detection portion introducing nozzle to the detection portion;
a third container which stores a buffer solution which contains a luminescent substance; and
a reservoir base on which the magnetic separation portion, the second container and the third container are provided.

4. The automatic analyzer according to claim 2 or 3, wherein
the reservoir base is rotatable and liftable, and the second container, the third container and the magnetic separation portion are provided radially about an axis of rotation of the reservoir base.

5. The automatic analyzer according to claim 2 or 3, wherein
the reservoir base is rotatable and liftable, and the second container, the third container and the magnetic separation portion are provided along an axial direction of the reservoir base in a horizontal movement direction.

6. The automatic analyzer according to claim 2 or 3, wherein
a trajectory of the magnetic separation portion, and trajectories of the first nozzle and the second nozzle intersect with each other.

7. The automatic analyzer according to claim 6, further comprising an LFC container which is provided on the reservoir base, and stores a flow path washing solution for washing the first nozzle and the detection portion introducing nozzle.

8. The automatic analyzer according to claim 7, wherein
the LFC container includes a partition that divides the flow path washing solution into a washing solution for washing the first nozzle and a washing solution for washing the detection portion introducing nozzle.

9. The automatic analyzer according to claim 2 or 3, further comprising a conveyance unit that conveys the first container to the magnetic separation portion, wherein
the conveyance unit is positioned above the magnetic separation portion in a vertical direction in a state where the detection portion introducing nozzle is positioned above the third container in the vertical direction.

10. The automatic analyzer according to claim 2 or 3, further comprising a conveyance unit that conveys the first container to the magnetic separation portion, wherein
when the detection portion introducing nozzle aspirates the buffer solution from above the third container, the conveyance unit is controlled so as to provide the first container on the magnetic separation portion, or is controlled so as to collect the first container from the magnetic separation portion.
